# EUROPÄISCHE PATENTANMELDUNG

(11) **EP 3 187 335 A1**
(43) Veröffentlichungstag der Anmeldung: **05.07.2017**
(21) Anmeldenummer: 16207551.9
(22) Anmeldetag: 30.12.2016
(51) Int. Cl.: B32B 37/12, B60J 1/00, B32B 27/36, B32B 27/40, B29C 65/48, B32B 38/16, B32B 37/00, B29L 31/30, F41H 5/04, F41H 5/26

(54) **VERBUNDSCHEIBE MIT GERINGEM DIOPTRIENWERT**

(30) Priorität: 30.12.2015 DE 102015016877
(71) Anmelder: KRD Sicherheitstechnik GmbH, 21502 Geesthacht (DE)
(72) Erfinder: BRAMMER, Beate-Korinna, 21357 Bardowick (DE); HINRICHSEN, Denni, 21423 Drage OT Stove (DE)
(74) Vertreter: Meissner Bolte Partnerschaft mbB

(57) **Zusammenfassung**

Verfahren zur Herstellung einer Scheibe, insbesondere einer Sicherheitsscheibe für die Fahrzeugverglasung, Schritte umfassend, bei denen man a1) optional mehrere transparente Kunststoffscheiben trocknet; a) die mehreren transparenten Kunststoffscheiben jeweils über eine transparente Klebstoffschicht zu einem Mehrfachverbund miteinander verbindet; und b) anschließend den Mehrfachverbund (10) umformt. Darüber hinaus betrifft die Offenbarung auch eine Scheibe, insbesondere eine Sicherheitsscheibe für die Fahrzeugverglasung, bestehend aus einem Mehrfachverbund aus mehreren transparenten Kunststoffscheiben, die jeweils über eine transparente Klebstoffschicht miteinander verbunden sind, wobei der Verbund einen Dioptrienwert ≤ 0,06dpt aufweist, sowie eine Scheibe, die nach dem erfindungsgemäßen Verfahren hergestellt ist.

## Beschreibung

Die Erfindung bezieht sich auf eine Scheibe, insbesondere eine Sicherheitsscheibe für die Fahrzeugverglasung, die aus einem Mehrfachverbund von Kunststoffscheiben aufgebaut ist. Darüber hinaus betrifft die Erfindung ein Verfahren zur Herstellung solcher Scheiben.

Aus Kunststoffscheiben aufgebaute Mehrfachverbünde sind in vielerlei Hinsicht interessant.

Generell gilt bei der Entwicklung von Fahrzeugen die Regel, dass möglichst gewichtssparende Komponenten eingesetzt werden. Eine z. B. 5 mm dicke Verbundglasscheibe aus Silikatglas wiegt 12 kg/m² während eine 5 mm dicke Polycarbonatscheibe nur 6 kg/m² wiegt. Der Einbau von Kunststoffscheiben würde also eine deutliche Gewichtsersparnis darstellen.

Weiterhin sind Kunststoffverscheibungen auch als Sicherheitsscheiben für Fahrzeuge geeignet, die gewaltsamen äußeren Einflüssen widerstehen müssen. Beispiele sind z. B. Polizeifahrzeuge, Baufahrzeuge wie z. B. Bagger, Radlader, Forstfahrzeuge wie z. B. Erntemaschinen, Transportfahrzeuge im Forst, Luftfahrzeuge wie z. B. Hubschrauber, Flugzeuge oder Schienenfahrzeuge wie z. B. Hochgeschwindigkeitszüge und Personenbeförderungszüge. In diesem Zusammenhang bietet sich insbesondere der Einbau von Polycarbonatscheiben an, da diese besonders schlagfest sind.

Die hier verwendeten Scheiben müssen nicht nur das Eindringen von Steinen, das Einschlagen, das Durchschießen mit Präzisionsschleudern und das Eindringen von brennbaren Flüssigkeiten verhindern, sondern auch eine ausreichende Chemikalien-, Witterungs- und Temperaturbeständigkeit und Abriebfestigkeit sowie eine klare und verzerrungsfreie Durchsicht gewährleisten. Ein Problem bei der Verarbeitung von Kunststoffscheiben ist, dass die Scheiben ab einer gewissen Dicke nicht mehr die optischen Anforderungen für eine Straßenzulassung erfüllen. Diese schreiben eine Durchsicht der Scheiben die für die Sicht des Fahrzeugführers von Bedeutung sind, speziell Frontscheiben mit einem Dioptrienwert von ≤ 0,06dpt vor, die nach der Beschreibung der DIN 52305: 1995-06 bestimmt wird.

Scheiben mit einem höheren Dioptrienwert als dem zulässigen Grenzwert führen zu optischen Beeinträchtigungen, die mindestens das Wohlbefinden des Fahrzeuglenkers gegebenenfalls aber auch die Sicherheit des Fahrzeuges beeinträchtigen.

Darüber hinaus ist die Herstellung von Scheiben ab einer gewissen Baugröße zusätzlich dadurch erschwert, dass die Umformung bzw. Formgebung der zunächst planen Einzelscheiben üblicherweise vor der Laminierung des Verbundes im Autoklaven erfolgt. Die zur Abdeckung der polymeren Scheiben in den Formgebungswerkzeugen erforderlichen Silikatglasscheiben können nur sehr begrenzt gewölbt werden und sind erheblich teurer als plane Silikatglasscheiben. Darüber hinaus sind die Einsatzmengen im Autoklaven bei starken Wölbungen, wie z. B. für Forstfahrzeuge erforderlich, pro Produktionszyklus so gering, dass keine wirtschaftliche Herstellung der Verbundscheiben mehr möglich ist.

Aufgabe der Erfindung ist es daher, Kunststoffverscheibungen bereitzustellen, die einerseits die optischen Anforderungen erfüllen, andererseits auch die für einen Einbau in ein Kraftfahrzeug vorgeschriebenen Sicherheitsanforderungen erfüllen und darüber hinaus kostengünstiger herstellbar sind.

### Beschreibung

Gelöst wird die Aufgabe mit einer Scheibe, insbesondere einer Sicherheitsscheibe, die die Merkmale des Anspruchs 13 oder 14 aufweist, sowie durch ein Verfahren zur Herstellung solcher Scheiben gemäß Anspruch 1.

Die Erfindung trägt der Tatsache Rechnung, dass die Dioptrienwerte einer Kunststoffscheibe, insbesondere einer Polycarbonatscheibe mit abnehmender Dicke kleiner werden. So weist z.B. eine monolithische Polycarbonatscheibe in 20 mm Dicke einen Wert auf, der deutlich oberhalb des Grenzwertes liegt. Ab einer Dicke von ca. 8 mm bis 12 mm und darunter, pendeln sich die optischen Dioptrienwerte unter 0,06 dpt ein.

Überraschend hat sich nun herausgestellt, dass sich in einem Verbund die einzelnen Dioptrienwerte der verbauten Kunststoffscheiben nicht addieren, insbesondere, wenn der Verbund aus Polycarbonatscheiben aufgebaut ist, die jeweils über eine tPU-Folie miteinander verbunden sind, und die Kunststoffverbundscheiben mittels des erfindungsgemäßen Verfahrens hergestellt sind. Aufgrund der ähnlichen Brechungsindizes der einzelnen Verbundmaterialien zueinander (Bsp. PC 1,587; tPU (thermoplastisches Polyurethan) 1,488) und dem parallelen Schichtdickenaufbau im Verbund, wird die Ablenkung des Lichtes nicht maßgeblich beeinträchtigt, was zu den gewünschten niedrigen Dioptrienwerten führt. Zudem besitzen die verwendeten Materialien herstellungsbedingt, insbesondere durch Verwendung des erfindungsgemäßen Herstellungsverfahrens, die nötige optische Qualität und Oberflächengüte, um einen solchen Verbund zu realisieren. In der Regel weist der Verbund daher einen Dioptrienwert auf, der denen der einzelnen Kunststoffscheiben entspricht.

Es hat sich ferner überraschenderweise herausgestellt, dass Verbundscheiben mit einem derart guten Dioptrienwert und den weiteren oben genannten, gewünschten Eigenschaften hergestellt werden können, indem die einzelnen Schichten zuerst in dem gewünschten Schichtverbund laminiert werden und erst anschließend in die gewünschte Form gebracht werden. Durch diese Vorgehensweise werden nicht nur Scheiben mit den gewünschten Eigenschaften erzeugt, das Verfahren ist auch durch die Platzersparnis im Autoklaven, in dem die Laminierung stattfinden kann, kostensparend durchführbar. Gleichzeitig kann die Laminierung von planen Verbunden auch in autoklavfreien Laminationsverfahren in spezialisierten Laminatoren vorgenommen werden.

Daher betrifft die Erfindung in einem ersten Aspekt ein Verfahren zur Herstellung einer Scheibe, insbesondere einer Sicherheitsscheibe für die Fahrzeugverglasung, Schritte umfassend, bei denen man a1) optional mehrere transparente Kunststoffscheiben trocknet; a) die mehreren transparenten Kunststoffscheiben jeweils über eine transparente Klebstoffschicht zu einem Mehrfachverbund miteinander verbindet; und b) anschließend den Mehrfachverbund umformt.

Durch die gründliche Trocknung in Schritt a1) wird eine durch Feuchtigkeit verursachte Blasenbildung im Material verhindert. Der Fachmann ist in der Lage, geeignete Trocknungszeiten und -temperaturen zu ermitteln. Die Trocknung kann z. B. bei Temperaturen von 80°C bis 120°C, vorzugsweise von 90°C bis 110°C, z. B. etwa 100°C erfolgen. Die Trocknung kann z. B. für 12 h bis 48 h, vorzugsweise für 18 h bis 36 h, z. B. etwa 24 h erfolgen.

In Schritt a) werden mehrere transparente Kunststoffscheiben jeweils über eine transparente Klebstoffschicht zu einem Mehrfachverbund miteinander verbunden. Dies bedeutet, dass sich die Kunststoffscheiben und Klebstoffschichten in dem Verbund abwechseln. Der Mehrfachverbund kann z.B. 2, 3, 4, 5 oder mehr Kunststoffscheiben umfassen. In einer bevorzugten Ausführungsform werden in Schritt a) zwei transparente Kunststoffscheiben, vorzugsweise Polycarbonatscheiben, über eine transparente Klebstoffschicht, vorzugsweise eine Folie aus thermoplastischem Polyurethan, zu einem Mehrfachverbund miteinander verbunden.

Die Verbindung in Schritt a) kann z. B. durch Autoklavlaminieren, Presslaminieren, Vakuumlaminieren, oder eine Harzinjektion hergestellt werden. Werden die Kunststoffscheiben jeweils über eine transparente Klebstoffschicht durch Autoklavlaminieren zu einem Mehrfachverbund miteinander verbunden, so kann das Laminieren z. B bei 80°C bis 120°C, vorzugsweise 95°C bis 115°C, z. B etwa 106°C durchgeführt werden. Der Druck kann hierbei von etwa 2 bar bis 14 bar variiert werden, vorzugsweise 7 bar bis 12 bar, z. B. etwa 9,8 bar. Die Kunststoffscheiben in Schritt a) können somit z. B. durch Laminieren bei 80°C bis 120 °C und einem Druck von 6 bar bis 14 bar miteinander verbunden werden. Die Haltezeit kann je nach Verbunddicke variiert werden, z. B. zwischen 200 min und 600 min. Der Fachmann ist in der Lage, innerhalb dieses Rahmens geeignete Haltezeiten für einen bestimmten Verbund zu ermitteln.

Vor dem Verbinden in Schritt a) kann in einem weiteren Schritt a2) durch einen Vakuumschritt, z. B. für etwa 24 h bei minus 0,98 bar, die Bildung von Luftblasen innerhalb des Verbundes verhindert werden.

Das Umformen in Schritt b) kann z. B. bei einer Temperatur von 170°C bis 200°C, vorzugsweise 175°C bis 190°C, z. B. etwa 180°C durchgeführt werden. Geeignete Haltezeiten sind z. B. für 10 min bis 90 min, vorzugsweise für 30 min bis 60 min, z. B. etwa 40 min. Die Umformung kann über vorgewärmte planare Scheibenverbunde in einer Zwangsform, z. B. einer Holzzwangsform, Schwerkraftbiegen oder über einen Tiefziehprozess erfolgen. Diese Verfahrensarten sind Fachleuten bekannt. Vorzugsweise erfolgt die Umformung in Schritt b) in einer Zwangsform z. B. in einem Ofen.

Das Umformen in Schritt b) kann das Einbringen einer Krümmung mit einem Krümmungsradius von 3500 mm oder weniger, vorzugsweise 2500 mm oder weniger, stärker bevorzugt 1500 mm oder weniger, z. B. 800 mm, umfassen. Die Krümmung kann entsprechend den jeweiligen Anforderungen, eine zwei- oder dreidimensionale Krümmung sein.

In einem zweiten Aspekt betrifft die Erfindung eine Scheibe, vorzugsweise eine gekrümmte Scheibe, insbesondere eine Sicherheitsscheibe für die Fahrzeugverglasung, bestehend aus einem Mehrfachverbund aus mehreren transparenten Kunststoffscheiben, die jeweils über eine transparente Klebstoffschicht miteinander verbunden sind, wobei der Verbund einen Dioptrienwert ≤ 0,06 dpt aufweist. Daneben betrifft die Erfindung auch eine Scheibe, vorzugsweise eine gekrümmte Scheibe, insbesondere eine Sicherheitsscheibe für die Fahrzeugverglasung, hergestellt mit dem erfindungsgemäßen Verfahren.

Die Scheibe ist vorzugsweise eine gewölbte bzw. gekrümmte Scheibe. Die Scheibe umfasst vorzugsweise eine Krümmung mit einem Krümmungsradius von 3500 mm oder weniger, vorzugsweise 2500 mm oder weniger, stärker bevorzugt 1500 mm oder weniger, z. B. 800 mm.

Die Ausführungen zu Eigenschaften der erfindungsgemäßen Scheibe hierin gelten in gleicher Weise auch für Scheiben, die mittels des erfindungsgemäßen Verfahrens hergestellt werden sowie für das Verfahren selbst.

Die erfindungsgemäße Scheibe besteht aus mehreren Kunststoffscheiben, insbesondere aus Polycarbonat, die Dicken von <12 mm aufweisen. Bevorzugt sind die Kunststoffscheiben somit Polycarbonatscheiben. Diese Scheiben werden über eine Klebschicht, insbesondere eine tPU-Folie miteinander verbunden. Die eingesetzte Plattenware darf dabei in den Schichtstärken variieren, wobei die Anzahl der einzelnen Platten, ihr Material und die Schichtdicke so gewählt werden, dass sich eine Verbunddicke zwischen 12 und 40 mm einstellt. Die Dicke des Verbunds ist somit ausreichend, um eine Stabilität zu gewährleisten, die die Anforderungen einer Sicherheitsverglasung erfüllt. In dem Dickenbereich von 12 bis 40 mm lassen sich sowohl die Anforderungen bei handelsüblichen Kraftfahrzeugen als auch die oben geschilderten erhöhten Sicherheitsanforderungen bei Einsatz- oder Forstfahrzeugen realisieren.

Die Scheibe besteht vorzugsweise aus mehreren Polycarbonat-Einzelscheiben. Es ist aber auch möglich, eine oder mehrere Einzelscheiben aus einem anderen Material, z.B. PMMA einzusetzen.

Generell wird erfindungsgemäß darauf zu achten sein, dass die Dicke des Verbundes und die Eigenschaften der verbauten Einzelscheiben neben ihren optischen Eigenschaften weiterhin so gewählt sind, dass die für den jeweiligen Einsatzzweck vorgeschriebene Stabilität gewährleistet wird.

Die Dicke des Verbundes kann sich in vorteilhaften Ausgestaltungen zwischen 12 und 40 mm bewegen, wobei weiterhin vorzugsweise vorgesehen ist, dass die Dicke der einzelnen Kunststoffscheiben, insbesondere Polycarbonat Scheiben, zwischen 2 und 12 mm liegt. Einzelscheiben z. B. aus Polycarbonat oder PMMA mit den bevorzugten Dicken zwischen 2 mm und 12 mm weisen bei entsprechend sorgfältiger Herstellung Dioptrienwerte zwischen 0,01 dpt und 0,06 dpt auf. Dazu wird die optische Qualität des verwendeten Plattenmateriales hinsichtlich der eingeschlossenen Fremdbestandteile im Material, Kratzer und Welligkeit auf der Oberfläche, Durchsicht und die damit verbunden möglichen optischen Verzerrungen sowie die gemessenen Dioptrienwerte im Ganzen betrachtet und bewertet.

Wie oben bereits erwähnt, addieren sich die Dioptrienwerte der einzelnen in dem Verbund verbauten Scheiben nicht. Der Gesamtdioptrienwert des fertigen Verbundes bewegt sich vielmehr in etwa in dem Bereich der Dioptrienwerte der Einzelscheiben.

Üblicherweise werden die bei der Fahrzeugverglasung eingesetzten Scheiben mit Funktionsbeschichtungen versehen, die ihnen spezielle Eigenschaften verleihen. So kann z. B. auf der Außenseite eine Beschichtung vorgesehen werden, die die Scheibe abriebfest, kratzfest und/oder UV-beständig macht, bzw. der Scheibe einen Lotus Effekt verleiht, um Wasser abperlen zu lassen. Innen können Beschichtungen vorgesehen sein, die die Scheibe einfärben oder ihr einen Anti Fog Effekt verleihen, bzw. sie abriebfest, kratzfest oder anti-statisch machen. Dies ist auch bei dem erfindungsgemäßen Verbund möglich. Hierbei wird auf die freie Seite mindestens einer der äußeren im Verbund verbauten Kunststoffscheiben die gewünschte Beschichtung aufgebracht. In einer Ausführungsform ist die nach außen weisende Seite mindestens einer der beiden äußeren Kunststoffscheiben somit mit einer Funktionsbeschichtung versehen.

Die Verklebung zwischen den Einzelscheiben kann mit einem beliebigen transparenten Elastomer-Kleber erfolgen. Die bereits erwähnten tPU-Folien erlauben eine besonders gute Verklebung der Einzelscheiben. Bevorzugt ist die Klebstoffschicht zwischen den Kunststoffplatten bzw. -scheiben durch eine tPU-Folie gebildet. Die Begriffe "Klebstoffschicht" und "Klebeschicht" werden hierin synonym verwendet. Weiterhin lassen sie sich, falls gewünscht, gut derart einfärben, dass die Farben dauerhaft im Verbund sind und auch über die Jahre Farbstabil bleiben. Die tPU-Folie kann somit gefärbt sein. Es ist sogar möglich Farbverläufe herzustellen, analog heutigen Blendschutzstreifen bei Frontscheiben in KFZs. In der Regel weisen tPU-Folien standardisierte Dicken von z.B. 0,38 mm, 0,63 mm, 1,27 mm oder 1,92 mm auf. Es ist aber auch möglich die tPU-Folien, bzw. die Klebschicht mit anderen Dicken in einem Bereich zwischen 0,3 mm und 4 mm vorzusehen.

Bei tPU (thermoplastisches Polyurethan) handelt es sich um einen elastischen Werkstoff mit einem hohen Rückstellvermögen und einer hohen Transparenz, die den Werkstoff für die Verwendung in Kunststoffscheiben besonders geeignet macht. Die tPU-Schicht klebt dabei einerseits die beiden Scheiben zusammen, andererseits wirkt die Schicht aber auch als Puffer zwischen den beiden Scheiben, nimmt mechanische Verspannungen auf und verhindert so eine Delaminierung der beiden Scheiben. Außerdem verhindert eine tPU-Schicht, dass sich bei Überlast einer einzelnen PC Scheibe und Auftreten eines Risses in dieser Scheibe die Rissbildung auf die benachbarte Scheibe fortsetzt.

Die tPU-Schicht wird bevorzugt als Folie aufgebracht. Anstelle von tPU ist es auch denkbar, unterschiedliche Gießharze (z.B. Polyurethan- oder auch Epoxidharze) zur Verbindung der Scheiben einzusetzen. Weiterhin gibt es seit einigen Jahren Ethylenvinylacetat-Folien, die ebenfalls für das Verbinden von Glasplatten und auch Kunststoffplatten verwendet werden können.

Wie oben bereits ausgeführt sind die erfindungsgemäßen Verbünde insbesondere als Scheiben im Rahmen einer Fahrzeug- insbesondere Sicherheitsverglasung gedacht. Denkbar ist aber, dass die gesamte Verglasung mit solchen Verbünden erfolgt. Genauso gut ist aber auch möglich. z. B. nur die für die Sicht des Fahrers relevanten Scheiben, z.B. Frontscheiben entsprechend herzustellen. In einem weiteren Aspekt betrifft die Erfindung somit die Verwendung einer erfindungsgemäßen Scheibe zur Fahrzeugverglasung, insbesondere als Scheibe, die für die Sicht des Fahrers von Bedeutung ist.

Im Folgenden soll die Erfindung anhand mehrerer Beispiele und einer Abbildung näher beschrieben werden.

### Beispiele

### Beispiel 1:

### Herstellung einer Polycarbonatverbundscheibe

Zunächst wurden die einzelnen Polycarbonatscheiben mit der gewünschten Dicke im Extrudierverfahren hergestellt. Bei der Herstellung sind entscheidend für die optische Qualität das verwendete Polymer, sowie der spezifische Aufbau der Extrusions- und Kalandrieranlage und die damit abgestimmten Einstellungen. Die fertigen Einzelscheiben wurden dann mittels Zwangsformung bei 140°C bis 190°C in die gewünschte Form gebracht. Anschließend wurde auf mindestens einen der beiden Scheibenrohlinge, der später die Außenseite der Verbundscheibe bildet, eine Funktionsbeschichtung in Form von einem Speziallack aufgebracht. Die Einzelscheiben wurden dann unter Reinraumbedingungen mit tPU-Folien in den entsprechenden mehrschichtigen Verbund gelegt und über eine Vakuumbehandlung zur Vermeidung von Blasen in der Klebstoffschicht vorbereitet und dann im Autoklaven bei 2-12 bar, 92-140 C° für 250-600 min verpresst. Zum Abschluss wurde der Verbund auf das gewünschte Endmaß gebracht.

Wie im Stand der Technik üblich, wurden die fertigen Einzelscheiben in diesem Herstellungsverfahren zunächst mittels Zwangsformung in die gewünschte Form gebracht und erst anschließend zu einem Verbund verpresst. Der von dem Verbund im Autoklaven in Anspruch genommene Platz ist entsprechend der Krümmung groß.

### Beispiel 2:

### Vergleich der optischen Werte einer monolithischen Polycarbonat Scheibe mit einer Dicke von 15 mm und einem Verbund bestehend aus mehreren Polycarbonat Einzelscheiben mit addiert vergleichbarer Dicke (zu der monolithischen Scheibe).

Es wurden von jeder Charge mehrere monolithische bzw. Verbundscheiben vermessen. Die Messung erfolgte jeweils an mehreren Flächenpunkten. Für monolithische Scheiben mit einer Dicke von 15 mm ergab sich ein durchschnittlicher Dioptrienwert von 0,11 dpt. Im Gegensatz dazu hatten Verbundscheiben mit einer Dicke von 19 mm (bestehend aus 2 PC-Scheiben mit einer Dicke von 8 mm und 10 mm und einer tPU-schicht mit einer Dicke von 1,27 mm) und einer Dicke von 21 mm (bestehend aus 2 PC-Scheiben mit einer Dicke von 8 mm und 12 mm und einer tPU-schicht mit einer Dicke von 1,27 mm) bei Einsatz üblicher Messtechnik Dioptrienwerte von 0,04-0,06 dpt.

Die Angaben in dem Beispiel sind nicht limitierend. Denkbar sind natürlich auch Verbünde mit drei oder mehr Schichten PC + zwei oder mehr Schichten tPU (z.B. 6 mm PC + 6 mm PC + 6 mm PC + 1,27 mm tPU + 1,27 mm tPU).

### Beispiel 3:

### Herstellung einer Polycarbonatverbundscheibe nach dem erfindungsgemäßen Verfahren

Es wurden mehrere verschiedene Verbundscheiben nach dem erfindungsgemäßen Verfahren hergestellt. Die Scheiben unterscheiden sich in ihrer Steifigkeit und Flexibilität und können so unterschiedlichen mechanischen Anforderungen genügen. Es wurden diverse Verbundscheiben aus zwei Polycarbonat (PC)-Außenschichten und einer tPU-Zwischenschicht hergestellt. Die PC-Außenschichten wiesen eine Dicke von 2 mm bis 10 mm auf, die tPU-Zwischenschicht wies eine Dicke von 0,38 mm bis 1,27 mm auf.

Zunächst wurden die einzelnen Polycarbonatscheiben mit der gewünschten Dicke im Extrudierverfahren hergestellt. Bei der Herstellung sind entscheidend für die optische Qualität das verwendete Polymer, sowie der spezifische Aufbau der Extrusions- und Kalandrieranlage und die damit abgestimmten Einstellungen. Die fertigen, planen Einzelscheiben wurden dann zunächst für > 18 h bei 100°C getrocknet und anschließend unter Reinraumbedingungen mit tPU-Folien in den entsprechenden mehrschichtigen Verbund gelegt und über eine Vakuumbehandlung zur Vermeidung von Blasen in der Klebstoffschicht vorbereitet. Dann wurden die Scheiben im Autoklaven bei 8 bis 11 bar, 100-110°C für 200-500 min verpresst. Laminierzeiten betrugen z. B. 200 min für dünnere Verbunde und 500 min für dickere Verbunde. Anschließend kühlten die Verbunde ab.

Der fertige Scheibenverbund wurde dann mittels Zwangsformung bei 170°C bis 200°C für 10 bis 90 min, z. B. für 40 min bei 180°C, in die gewünschte Form gebracht.

Es wurden 3 Umformgrade definiert und entsprechend umgeformte Verbunde hergestellt. Die Umformgrade lagen oberhalb der beim gegenwärtigen Stand der Technik möglichen Umformung und entsprachen der Zielstellung für den Einsatz der angestrebten neuen Produkte bei Forstfahrzeugen:
Umformgrad 1: Scheibe 2D gebogen, Radius ca. 2500 mm,
Umformgrad 2: Scheibe 2D gebogen, Radius ca. 800 mm,
Umformgrad 3: Scheibe 3D gebogen, Radius ca. 1500 mm (X-Achse) und Radius ca. 900 mm (Y-Achse).

Bei Einsatz üblicher Messtechnik wiesen die mittels des erfindungsgemäßen Verfahrens hergestellten Verbundscheiben Dioptrienwerte von 0,02-0,06 dpt.auf.

Darüber hinaus wiesen die Scheiben auch die gewünschte Stabilität auf: Ein Gewicht von 227 kg wurde im FOPS (falling object protection structure)-Test aus einer Fallhöhe von 2,6 m und 5,2 m zentral auf die gewölbten Verbundscheiben fallen gelassen (Energie: 5800 J bzw. 11600 J). Die Scheiben zeigten keine Zersplitterung und blieben im Wesentlichen intakt. Erst bei einer Fallhöhe von 5,8 m (12916 J) brachen die dickeren getesteten Verbundscheiben - Splitter wurden jedoch von der Verbundfolie aufgefangen. Die parallel getestete 12 mm PC Monoscheibe zerbrach vollständig im Test mit 20 kg und einer Fallhöhe von 9 m (1766 J).

### Ausführungsbeispiele

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Allerdings ist die Erfindung nicht auf diese Ausführungsbeispiele beschränkt.

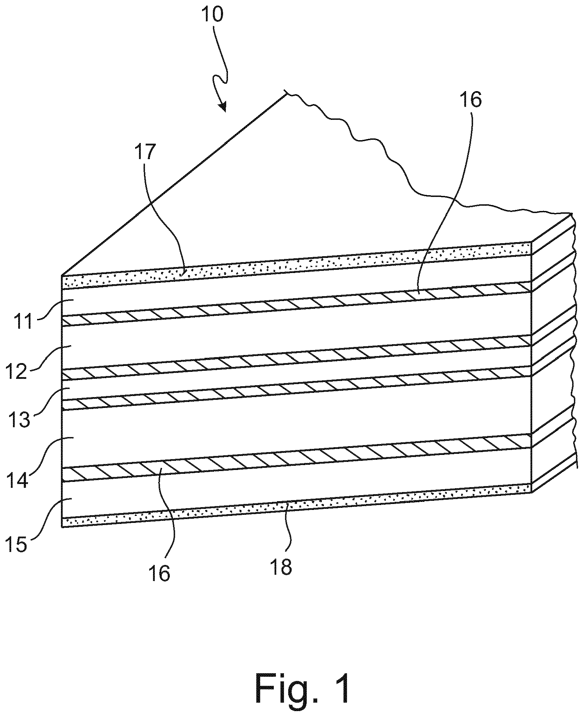

In der Abbildung ist in einer Teilschnittansicht eine erfindungsgemäße Verbundscheibe 10 dargestellt.

Die Scheibe 10 ist aus mehreren einzelnen Kunststoffscheiben 11, 12, 13, 14 und 15 aufgebaut, die jeweils über eine tPU-Folie 16 miteinander verbunden sind. Jeweils auf der Außenseite der äußeren Scheiben 11 und 15 ist eine Funktionsbeschichtung 17 bzw. 18 aufgebracht.

In der Regel besteht die erfindungsgemäße Scheibe aus einem Verbund aus Polycarbonatscheiben. Es ist aber auch genauso gut möglich eine oder mehrere der Polycarbonatscheiben durch eine Scheibe aus PMMA oder einem anderen Kunststoff zu ersetzen.

Die dargestellte Scheibe 10 ist nicht gebogen. Wie oben ausgeführt kann sie jedoch auch einen gekrümmten Verlauf etc. aufweisen. Hierzu wäre es dann erforderlich die Einzelscheiben 11 - 15 zuvor in einer Zwangsformung in die gewünschte Form zu bringen und dann im Autoklaven über die tPU Folien 16 miteinander zu verbinden. Bevorzugt würde die Scheibe jedoch gemäß des erfindungsgemäßen Verfahrens erst nach dem Laminieren im Autoklaven in die gewünschte Form gebracht.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen der vorgestellten Einzelmerkmale verwirklicht werden können, sofern der Schutzbereich der beigefügten Ansprüche nicht verlassen wird. Die vorliegende Offenbarung schließt sämtliche Kombinationen der vorgestellten Einzelmerkmale ein.

## Patentansprüche

1. Verfahren zur Herstellung einer Scheibe, insbesondere einer Sicherheitsscheibe für die Fahrzeugverglasung, Schritte umfassend, bei denen man
a1) optional mehrere transparente Kunststoffscheiben (11, 12, 13, 14, 15) trocknet;
a) die mehreren transparenten Kunststoffscheiben (11, 12, 13, 14, 15) jeweils über eine transparente Klebstoffschicht (16) zu einem Mehrfachverbund (10) miteinander verbindet; und
b) anschließend den Mehrfachverbund (10) umformt.

2. Verfahren nach Anspruch 1, **dadurch gekennzeichnet, dass** das Umformen in Schritt b) bei einer Temperatur von 170°C bis 200°C, vorzugsweise für 10 min bis 90 min, durchgeführt wird.

3. Verfahren nach Anspruch 1 oder 2, **dadurch gekennzeichnet, dass** das Umformen in Schritt b) das Einbringen einer Krümmung mit einem Krümmungsradius von 3500 mm oder weniger umfasst.

4. Verfahren nach einem der vorhergehenden Ansprüche, **dadurch gekennzeichnet, dass** die Kunststoffscheiben (11, 12, 13, 14, 15) in Schritt a) durch Laminieren bei 80°C bis 120 °C und einem Druck von 6 bar bis 14 bar miteinander verbunden werden.

5. Verfahren nach einem der vorhergehenden Ansprüche, **dadurch gekennzeichnet, dass** die Kunststoffscheiben (11, 12, 13, 14, 15) Polycarbonatscheiben sind.

6. Verfahren nach einem der vorhergehenden Ansprüche, **dadurch gekennzeichnet, dass** die Dicke des Verbunds (10) ausreichend ist, um eine Stabilität zu gewährleisten, die die Anforderungen einer Sicherheitsverglasung erfüllt.

7. Verfahren nach einem der vorhergehenden Ansprüche, **dadurch gekennzeichnet, dass** die Dicke des Verbunds (10) im Bereich von 12 mm bis 40 mm liegt.

8. Verfahren nach einem der vorhergehenden Ansprüche, **dadurch gekennzeichnet, dass** die Dicke der einzelnen Kunststoffscheiben (11, 12, 13, 14, 15) zwischen 2 mm und 12 mm liegt.

9. Verfahren nach einem der vorhergehenden Ansprüche, **dadurch gekennzeichnet, dass** die Dioptrienwerte der einzelnen Kunststoffscheiben (11, 12, 13, 14, 15) zwischen 0,01 dpt und 0,06 dpt liegen.

10. Verfahren nach einem der vorhergehenden Ansprüche, **dadurch gekennzeichnet, dass** die nach außen weisende Seite mindestens einer der beiden äußeren Kunststoffscheiben (11, 15) mit einer Funktionsbeschichtung (17, 18) versehen ist.

11. Verfahren nach einem der vorhergehenden Ansprüche, **dadurch gekennzeichnet, dass** die Klebstoffschicht zwischen den Kunststoffplatten (11, 12, 13, 14, 15) durch eine tPU-Folie (16) gebildet ist.

12. Verfahren nach Anspruch 11, **dadurch gekennzeichnet, dass** die tPU-Folie gefärbt ist.

13. Gekrümmte Scheibe, insbesondere eine Sicherheitsscheibe für die Fahrzeugverglasung, bestehend aus einem Mehrfachverbund (10) aus mehreren transparenten Kunststoffscheiben (11, 12, 13, 14, 15), die jeweils über eine transparente Klebstoffschicht (16) miteinander verbunden sind, wobei der Verbund einen Dioptrienwert ≤ 0,06dpt aufweist.

14. Gekrümmte Scheibe, insbesondere eine Sicherheitsscheibe für die Fahrzeugverglasung, hergestellt mit einem Verfahren gemäß einem der Ansprüche 1 bis 12.

15. Verwendung einer Scheibe nach Anspruch 13 oder 14 zur Fahrzeugverglasung, insbesondere als Scheibe, die für die Sicht des Fahrers von Bedeutung ist.
